# FASCICULE DE BREVET EUROPEEN

(11) **EP 0 599 727 B1**
(45) Date de publication et mention de la délivrance du brevet: **10.04.1996**
(21) Numéro de dépôt: 93402839.0
(22) Date de dépôt: 22.11.1993
(51) Int. Cl.: G21F 9/34, G21C 19/34

(54) **Procédé et dispositif de traitement d'éléments activés par irradiation en vue de leur élimination**
Verfahren und Vorrichtung zur Behandlung von aktiven Elementen zur Entsorgung
Process and device for treating active elements in view of their elimination

(30) Priorité: 27.11.1992 FR 9214341
(43) Date de publication de la demande: 01.06.1994
(73) Titulaire: FRAMATOME, F-92400 Courbevoie (FR)
(72) Inventeur: Guiroy, Jean-Jacques, F-94210 La Varenne Saint-Hilaire (FR); Thouvenot, Rémi, F-89100 Sens (FR)
(74) Mandataire: Bouget, Lucien

(56) Documents cités:
- DE-A- 3 008 991
- DE-A- 4 023 117
- FR-A- 2 390 808
- PATENT ABSTRACTS OF JAPAN vol. 017, no. 231 (P-1532)11 Mai 1993 & JP-A-04 359 194 (CHICHIBU CEMENT CO LTD;OTHERS: 02) 11 Décembre 1992

## Description

L'invention concerne un procédé de traitement d'éléments activés par irradiation en vue de leur élimination et en particulier de chemises d'éléments combustibles d'un réacteur nucléaire du type graphite-gaz.

Les réacteurs nucléaires du type graphite-gaz qui sont modérés par du graphite et refroidis par du gaz carbonique comportent des éléments combustibles disposés dans des chemises en graphite de forme tubulaire comportant à l'une de leurs extrémités des fils en acier inoxydable implantés dans l'épaisseur de la chemise en graphite et perpendiculaires entre eux.

Les fils en acier inoxydable, appelés fils de selle, sont destinés à maintenir, dans la partie centrale de la chemise, une pièce en graphite appelée selle.

Après un certain temps d'utilisation à l'intérieur du coeur du réacteur nucléaire, les chemises d'éléments combustibles doivent être éliminées et remplacées.

Du fait de leur séjour dans le coeur du réacteur nucléaire, les chemises sont activées, de sorte qu'il est nécessaire de prendre certaines précautions pour effectuer leur élimination.

En effet, si le graphite des chemises est activé modérément, il n'en va pas de même de l'acier inoxydable constituant les fils qui présente une très forte activité du fait de la nature de ses constituants.

Il est donc souhaitable, afin de réaliser l'élimination des chemises pour éléments combustibles dans des conditions satisfaisantes, de réaliser une séparation du graphite et des fils d'acier inoxydable, de manière à réaliser le stockage et l'élimination séparés des deux constituants des chemises pour éléments combustibles.

Un des facteurs permettant de faciliter la séparation du graphite et des fils en acier inoxydable est que l'acier inoxydable des fils est un acier magnétique et que le graphite est magnétique.

Le document D1:DE-A-40 23 117 décrit un procédé de stockage pour gravats légèrement contaminés qui comporte une étape de séparation des éléments métalliques à l'aide des moyens magnétiques en vue de la préparation d'un béton de remplissage.

On ne connaissait cependant pas jusqu'ici de procédé et de dispositif permettant de réaliser de manière automatique et efficace, le traitement de telles chemises pour éléments combustibles, en vue de leur élimination.

De manière plus générale, on ne connaissait pas de procédé et de dispositif permettant de réaliser le traitement et l'élimination d'éléments activés comportant deux constituants présentant des caractéristiques magnétiques sensiblement différentes et des taux d'activation également différents.

Le but de l'invention est donc de proposer un procédé de traitement d'éléments activés par irradiation en vue de leur élimination, les éléments activés comportant deux constituants présentant des caractéristiques magnétiques différentes, l'un des constituants ou premier constituant présentant une forte activité et l'autre constituant, ou second constituant, présentant une activité sensiblement inférieure, ce procédé permettant de réaliser de manière efficace et totalement automatique, la séparation et le stockage séparés des deux constituants des éléments activés.

Dans ce but :
- on réalise le broyage des éléments activés pour obtenir des fragments unitaires constitués chacun principalement du premier ou du second constituant,
- on sépare et on dirige par des moyens magnétiques, les fragments constitués principalement par le premier constituant vers un premier poste de décharge et de stockage, et les fragments constitués principalement par le second constituant vers un moyen de manutention continu,
- on réalise une détection par mesure de radioactivité, de fragments constitués principalement de premier constituant, sur le moyen de manutention continu,
- on évacue vers un second poste de décharge et de stockage, les fragments déposés sur le moyen de manutention continu si l'on ne détecte pas de fragment du premier constituant sur le moyen de manutention continu et vers le premier poste de décharge et de stockage si au moins un fragment du premier constituant est détecté sur le moyen de manutention continu.

L'invention concerne également un dispositif de traitement d'éléments activés par irradiation, en vue de leur élimination, comportant :
- un broyeur,
- des moyens d'évacuation de produit sous forme divisée à la sortie du broyeur,
- un séparateur magnétique ayant une partie d'entrée communiquant avec les moyens d'évacuation du broyeur pour son alimentation et deux voies de sortie de produit sous forme divisée,
- un premier moyen de stockage dans lequel débouche une première voie de sortie du séparateur,
- un moyen de manutention continu à deux sens de circulation comportant une première extrémité disposée en-dessous de la seconde voie de sortie du séparateur et au-dessus du premier moyen de stockage,
- un détecteur de radio-activité disposé à proximité du moyen de manutention continu,
- et un second moyen de stockage et d'évacuation disposé en-dessous d'une seconde extrémité du moyen de manutention continu pour recevoir les produits divisés déversés par le moyen de manutention continu dans un premier sens de circulation.

Afin de bien faire comprendre l'invention, on va maintenant décrire, à titre d'exemple non limitatif, en se référant aux figures jointes en annexe, un exemple de mise en oeuvre du procédé suivant l'invention et le dispositif correspondant.

La figure 1 est une vue générale en élévation et en coupe d'un dispositif permettant de réaliser le traitement par broyage des chemises pour éléments combustibles d'un réacteur nucléaire du type graphite-gaz, et séparation de leurs deux constituants.

Les figures 2A, 2B et 2C sont des vues en élévation et en coupe d'un poste de décharge et de conditionnement du dispositif représenté sur la figure 1, au cours de phases successives de décharge et de conditionnement de fragments radio-actifs.

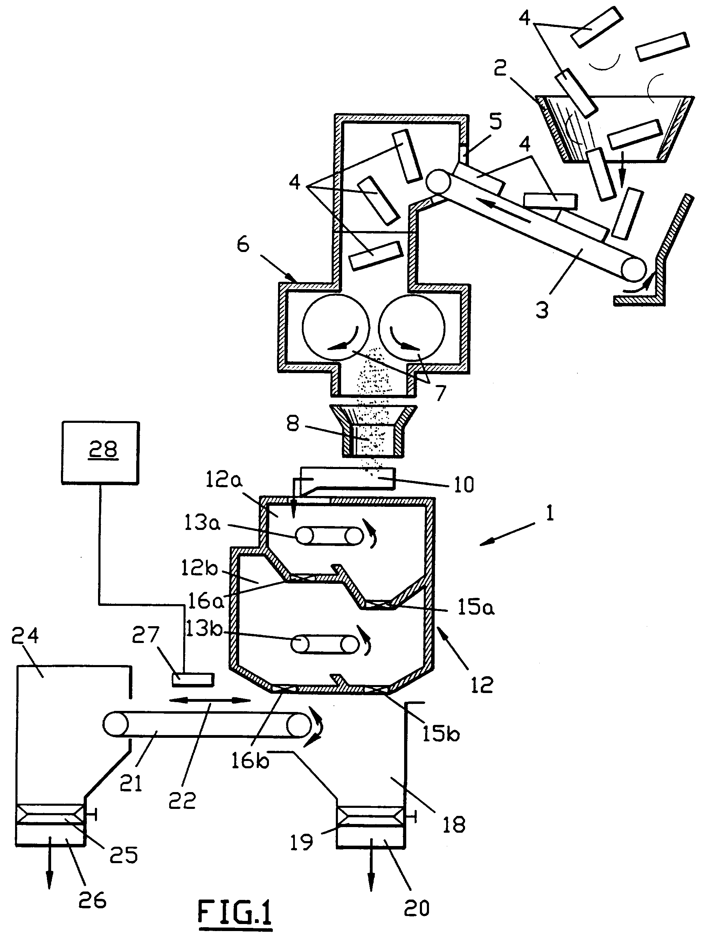

Sur la figure 1, on voit l'ensemble de l'installation permettant de réaliser le broyage et l'élimination séparés des constituants de chemises d'éléments combustibles d'un réacteur nucléaire graphite-gaz, l'installation étant désignée de manière générale par le repère 1.

L'installation 1 comporte une trémie d'alimentation 2 dont l'extrémité de sortie est placée au-dessus d'un transporteur 3 ayant un parcours incliné.

Des chemises d'éléments combustibles 4 en graphite renfermant des fils en acier inoxydable sont déversées dans la trémie 2 qui assure l'alimentation de l'extrémité d'entrée du transporteur 3 dont l'extrémité de sortie communique avec une goulotte 5 d'alimentation d'un broyeur à couteaux 6.

Les éléments combustibles 4 parviennent dans la goulotte 5 qui assure une alimentation régulière du broyeur à couteaux 6 comportant deux cylindres 7 tournant en sens inverse et garnis de couteaux de broyage.

Le broyeur 6 réalise la séparation des chemises 4 en fragments qui sont constitués soit de morceaux de graphite d'une dimension de quelques dizaines de millimètres, soit de fragments déchiquetés des fils en acier inoxydable.

A la sortie du broyeur 6, une goulotte de réception 8 reçoit un mélange hétérogène de fragments constitués soit de morceaux de graphite broyés soit de tronçons de fils en acier inoxydable. La goulotte 8 assure l'évacuation du mélange de fragments hétérogènes sur un transporteur 10 du même type que 3 dont la sortie se trouve au-dessus de l'ouverture d'entrée d'un séparateur magnétique à deux étages 12.

Le séparateur 12 comporte un étage supérieur 12a et un étage inférieure 12b équipés de moyens de séparation magnétiques constitués par des ensembles à courroies et rouleaux magnétiques respectivement 13a et 13b à haute intensité du type comportant des aimants permanents à terres rares et qui seront désignés par la suite comme rouleaux magnétiques 13a et 13b.

Chacun des étages de séparateur 12a et 12b comporte deux sorties, respectivement 15a et 16a et 15b et 16b.

Les sorties 15a et 15b, appelées premières sorties, sont destinées à recevoir principalement le premier constituant qui est le constituant magnétique, c'est-à-dire dans le cas des chemises d'éléments combustibles, le fil d'acier inoxydable.

Les secondes sorties 16a et 16b sont destinées à recevoir principalement le second constituant non magnétique, c'est-à-dire le graphite, dans le cas des chemises pour éléments combustibles.

Chacune des sorties 15a, 16a, 15b, 16b peut être équipée de moyens de fermeture commandés à distance.

Lorsque le mélange hétérogène déversé par le transporteur 10 dans l'ouverture d'entrée du séparateur 12 arrive au contact du rouleau magnétique 13a, le premier constituant magnétique, c'est-à-dire les fils inox, sont retenus et entraînés par le rouleau 13a qui assure leur déversement dans la trémie de la sortie 15a de l'étage de séparation 12a. Les fragments constitués principalement de graphite se déversent sans être déviés par le rouleau 13a dans la seconde sortie 16a.

Les fils inox déversés dans la trémie de la sortie 15a pénètrent dans l'étage 12b du séparateur pour se déverser directement dans la première sortie 15b de l'étage 12b.

Le mélange constitué principalement de graphite qui se déverse sur le second rouleau magnétique 13b subit une séparation, les fils en acier inox pouvant subsister en mélange avec des morceaux de graphite étant retenus et transportés par le rouleau magnétique 13b pour être déversés dans la première sortie 15b de l'étage 12b.

Les fragments parvenant à la première sortie 15b de l'étage 12b qui sont constitués principalement d'acier inoxydable sont déversés dans une trémie 18 comportant une vanne de fermeture 19.

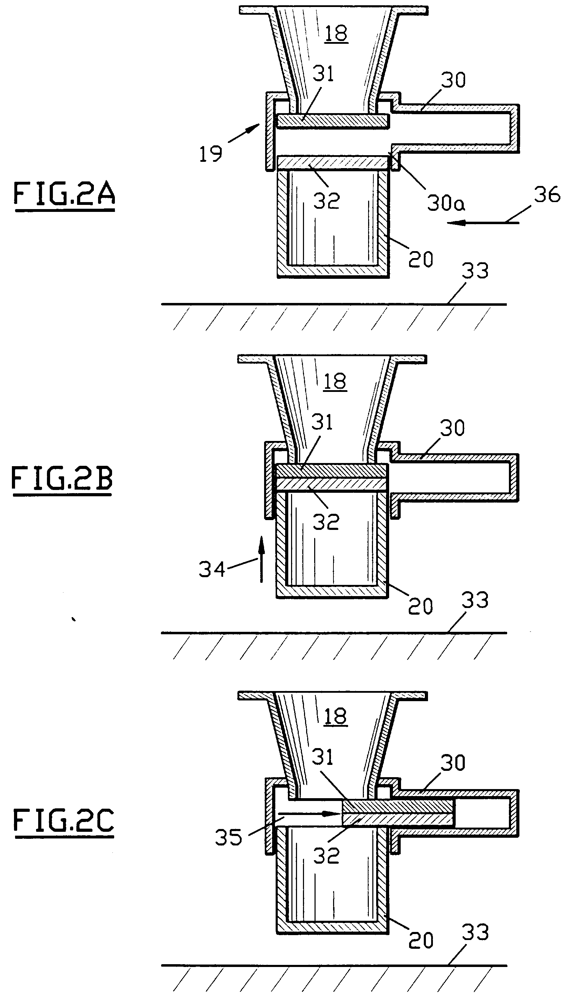

En-dessous de la vanne 19 est disposée une goulotte ou un conteneur de stockage 20, comme il sera expliqué plus loin en se référant aux figures 2A, 2B et 2C.

Il importe peu que quelques fragments de graphite soient encore présents en mélange avec les tronçons de fils inox, parvenant à la première sortie 15b du séparateur, dans la mesure où ces fragments de graphite présentent une activité bien inférieure à celle de l'inox. Les conditions de conditionnement et d'élimination du fil inox peuvent permettre de traiter quelques fragments résiduels de graphite.

En revanche, le but de la séparation est d'obtenir, à la seconde sortie 16b du second étage 12b du séparateur, uniquement des morceaux de graphite qui constituent la plus grande partie volumique des éléments traités en vue de leur élimination et qui présentent une activité faible ou modérée.

La seconde sortie 16b de l'étage de séparateur 12b est disposée au-dessus de l'extrémité d'entrée d'un moyen de manutention continu 21 qui peut être constitué par exemple par un convoyeur à bande. Le convoyeur à bande 21 présente des moyens de motorisation permettant de le faire fonctionner dans un sens de circulation ou dans l'autre, comme schématisé par les doubles flèches 22. L'extrémité d'entrée du convoyeur 21 est située au-dessus de la trémie 18 de réception du fil inoxydable.

L'extrémité de sortie du convoyeur 21 se trouve placée à l'intérieur d'une trémie 24 comportant une vanne de fermeture 25 à sa partie inférieure permettant d'isoler la trémie 24 ou de la mettre en communication avec une goulotte de sortie ou un conteneur de conditionnement 26, comme il sera expliqué en regard des figures 2A, 2B et 2C.

Un détecteur de radio-activité 27 tel qu'un détecteur à scintillation est disposé au-dessus de la courroie du transporteur 21. Le détecteur 27 est réglé à un niveau de sensibilité tel qu'il permet de déceler tout tronçon de fil inox à l'intérieur des fragments de graphite transportés par le convoyeur 21 dans le premier sens de circulation du convoyeur allant de l'extrémité d'entrée en-dessous de la sortie 16b du séparateur vers son extrémité de sortie, à l'intérieur de la trémie 24.

Le détecteur 27 est relié à une unité de commande 28 de la motorisation du convoyeur continu 21 et du transporteur d'entrée 3.

Dans le cas où le détecteur 27 décèle la présence d'au moins un fil en acier inoxydable dans les fragments de graphite transportés par le convoyeur 21, l'unité de commande 28 assure l'arrêt du convoyeur 21, la fermeture de la sortie 16b du séparateur, puis la mise en fonctionnement du convoyeur continu 21 dans son second sens de circulation, allant de la trémie 24 vers la trémie 18.

On effectue alors un rejet des fragments de graphite renfermant un ou plusieurs tronçons de fil inox dans la trémie 18 destinée à recevoir les tronçons de fils inox.

Lorsque le détecteur 27 ne décèle plus un niveau de radio-activité important correspondant à la présence de fils inox, sur le moyen de manutention continu 21, celui-ci est mis en fonctionnement dans son premier sens de circulation allant de la sortie 16b du séparateur vers la trémie 24, l'élément d'obturation de la sortie 16b du séparateur étant placé en position d'ouverture.

Dans le cas où le détecteur 27 décèle un niveau de radio-activité très élevé correspondant à une forte proportion de fils inox dans les particules de graphite transportées par le convoyeur 21, l'unité de commande 28 assure l'arrêt du transporteur 3 alimentant le broyeur.

En effet, dans le cas où la proportion de fils inox est importante, on peut conclure à un fonctionnement défectueux du séparateur 12 et il est alors préférable d'arrêter l'ensemble de l'installation de broyage et de séparation.

Le procédé et le dispositif suivant l'invention tels que décrits ci-dessus permettent donc de réaliser une séparation efficace et très sûre d'un premier constituant et d'un second constituant ayant des propriétés magnétiques et des niveaux d'activation différents, dans des éléments activés.

Le fonctionnement du dispositif suivant l'invention est totalement automatique et ne nécessite pas la présence d'opérateurs au voisinage de l'installation.

En outre, les dispositifs de décharge des matériaux à la sortie de l'installation qui seront décrits en se référant aux figures 2A, 2B et 2C permettent de réaliser la décharge, le conditionnement et l'élimination des fragments séparés par l'installation, sans contamination du milieu ambiant et dans des conditions assurant une protection biologique efficace.

Ces moyens sont particulièrement utiles en ce qui concerne l'évacuation des matériaux renfermant principalement du fil inox par la première sortie de l'installation comportant la goulotte 18, la vanne étanche de fermeture 19 et la goulotte ou le conteneur 20.

La description du dispositif de vidange représenté sur les figures 2A, 2B et 2C sera faite en référence aux éléments 18, 19 et 20 de la première sortie de l'installation 1 représentée sur la figure 1. Cependant, il est bien évident que la seconde sortie comportant la trémie 24, la vanne 25 et la goulotte ou conteneur 26 peut être réalisée de la façon décrite sur les figures 2A, 2B et 2C.

Comme il est visible sur les figures 2A, 2B et 2C, la trémie de sortie 18 de l'installation comporte à sa partie inférieure une vanne 19 comprenant un corps de vanne 30 et un élément de fermeture coulissant 31.

La partie inférieure du corps de vanne 30 présente une ouverture 30a au niveau de laquelle on peut venir placer un conteneur 20 fermé par un élément de fermeture étanche 32, comme représenté sur la figure 2A.

Le conteneur 20 destiné à recueillir les fragments fortement radio-actifs contenus dans la trémie 18 et constitués principalement par des tronçons de fils en acier inoxydable est un conteneur à haute intégrité présentant une forte épaisseur de paroi. Le conteneur 20 peut être placé dans la position représentée sur la figure 2A grâce à un chariot, non représenté, assurant son déplacement sur le sol 33, comme schématisé par la flèche 36.

Comme il est visible sur la figure 2B, un moyen de levage associé au chariot de support du conteneur 20 permet de lever le conteneur 20, de manière à introduire sa partie supérieure et l'élément de fermeture étanche 32, à l'intérieur de l'ouverture 30a du corps de vanne 30, comme schématisé par la flèche 34.

A la fin du déplacement vers le haut du conteneur 20, les éléments 31 et 32 sont en contact l'un avec l'autre.

Comme représenté sur la figure 2C et schématisé par la flèche 35, on peut alors déplacer simultanément les deux éléments de fermeture 31 et 32, de manière à mettre en communication la trémie 18 et le conteneur 20. Les fragments radio-actifs contenus dans la trémie 18 se déversent à l'intérieur du conteneur 20 dont on assure le remplissage.

On effectue alors le déplacement des éléments de fermeture 31 et 32 dans le sens inverse de la flèche 35 pour les replacer en position de fermeture de la trémie 18 et du conteneur 20.

Le conteneur 20 peut alors être abaissé en position de transport, de manière à être évacué vers un site de stockage ou une usine de traitement.

Il est bien évident que l'évacuation des particules de graphite reçues dans la trémie 24 peut être réalisée en utilisant un conteneur, comme dans le cas des fragments de fils inoxydables.

Cependant, du fait de la faible radio-activité des particules de graphite, il est possible également de déverser les particules de graphite par l'intermédiaire d'une goulotte dans un moyen de transport continu alimentant une unité d'élimination du graphite, telle qu'une unité d'incinération.

L'ensemble de l'installation 1 représentée sur la figure 1 peut être placé dans une cellule maintenue en dépression grâce à un système de ventilation de type classique qu'il n'est pas utile de décrire.

De manière à fonctionner en continu et de manière automatique, l'installation peut comporter différents moyens de détection et de commande. En particulier, le broyeur 6 peut comporter des moyens de détection de niveau. Ces moyens de détection peuvent être disposés au niveau du broyeur lui-même, afin d'assurer un contrôle de l'alimentation du broyeur par le transporteur 3 ou dans la goulotte de sortie, afin de permettre de régler le débit d'alimentation du séparateur magnétique.

Il est bien évident que l'invention ne se limite pas au mode de réalisation qui a été décrit.

C'est ainsi qu'on peut utiliser un broyeur différent d'un broyeur à couteaux et un séparateur magnétique d'un type différent d'un séparateur à rouleaux à haute intensité à aimants permanents à base de terres rares.

On peut utiliser tout type de détecteur de radio-activité pour assurer la détection de fils en acier inoxydable ou plus généralement d'un constituant à forte radio-activité sur le moyen de manutention continu.

Enfin, le procédé et le dispositif de l'invention peuvent être utilisés pour assurer un traitement d'éléments activés différents de chemises d'éléments combustibles d'un réacteur de type graphite-gaz. Le procédé et le dispositif suivant l'invention peuvent être utilisés pour effectuer un traitement avant élimination de tout élément radio-actif comportant au moins deux constituants ayant des caractéristiques magnétiques et des niveaux d'activité sensiblement différents.

## Revendications

1. Procédé de traitement d'éléments activés (4) par irradiation en vue de leur élimination, les éléments activés comportant deux constituants présentant des caractéristiques magnétiques différentes, l'un des constituants, ou premier constituant, présentant une forte activité et l'autre constituant, ou second constituant, présentant une activité sensiblement inférieure, caractérisé par le fait :
- qu'on réalise le broyage des éléments activés (4) pour obtenir des fragments unitaires constitués chacun principalement de premier ou de second constituant,
- qu'on sépare et qu'on dirige par des moyens magnétiques (12), les fragments constitués principalement par le premier constituant vers un premier poste de décharge et de conditionnement (18, 19, 20), et les fragments constitués principalement par le second constituant vers un moyen de manutention continu (21),
- qu'on réalise une détection par mesure de radio-activité, de fragments constitués principalement de premier constituant, sur le moyen de manutention continu (21),
- qu'on évacue vers un second poste de décharge et de stockage (24, 25, 26), les fragments déposés sur le moyen de manutention continu (21) si l'on ne détecte pas de fragment du premier constituant sur le moyen de manutention continu (21) et vers le premier poste de décharge et de conditionnement (18, 19, 20) si au moins un fragment du premier constituant est détecté sur le moyen de manutention continu (21).

2. Procédé suivant la revendication 1, caractérisé par le fait que les éléments activés par irradiation sont des chemises d'éléments combustibles d'un réacteur du type graphite-gaz constituées par un élément tubulaire en graphite et par des fils d'acier inoxydable implantés dans l'élément en graphite et qu'on réalise le broyage des éléments tubulaires en graphite pour obtenir des morceaux de graphite et des tronçons de fils en acier inoxydable.

3. Procédé selon la revendication 2, caractérisé par le fait que les tronçons de fils en acier inoxydable séparés des morceaux de graphite sont recueillis dans un conteneur (20) à haute intégrité.

4. Dispositif d'élimination d'éléments activés par irradiation caractérisé par le fait qu'il comporte :
- un broyeur (6),
- des moyens d'évacuation (10) de produit sous forme divisée à la sortie du broyeur,
- un séparateur magnétique (12) ayant une partie d'entrée communiquant avec les moyens d'évacuation (10) du broyeur (6) pour son alimentation et deux voies de sortie (15b, 16b) de produit sous forme divisée,
- un premier moyen de conditionnement (18, 19, 20) dans lequel débouche une première voie de sortie (15b) du séparateur,
- un moyen de manutention continu (21) à deux sens de circulation comportant une première extrémité disposée en-dessous de la seconde voie de sortie (16b) du séparateur et au-dessus du premier moyen de conditionnement (18, 19, 20),
- un détecteur de radio-activité (27) disposé à proximité du moyen de manutention continu (21),
- et un second moyen de stockage et d'évacuation (24, 25, 26) disposé en-dessous d'une seconde extrémité du moyen de manutention continu (21) pour recevoir les produits divisés déversés par le moyen de manutention continu (21) dans un premier sens de circulation.

5. Dispositif suivant la revendication 4, caractérisé par le fait que le broyeur (6) est un broyeur à couteaux.

6. Dispositif suivant l'une quelconque des revendications 4 et 5, caractérisé par le fait que le séparateur magnétique (12) est un séparateur à rouleaux à haute intensité comportant des aimants permanents à base de terres rares.

7. Dispositif suivant la revendication 6, caractérisé par le fait que le séparateur magnétique (12) comporte deux étages de séparation (12a, 12b).

8. Dispositif suivant l'une quelconque des revendications 4 à 7, caractérisé par le fait que le détecteur de radio-activité (27) est un détecteur à scintillation.

9. Dispositif suivant l'une quelconque des revendications 4 à 8, caractérisé par le fait que l'un au moins du premier moyen de conditionnement (18, 19, 20) et du second moyen de conditionnement (24, 25, 26) comporte une trémie (18, 24), un corps de vanne (30) disposé sous l'ouverture de sortie de la trémie (18), un élément (31) de fermeture de la trémie (18), un conteneur de transport et de stockage (20) comportant un élément de fermeture étanche (32), des moyens de transport et de levage du conteneur (20) à l'intérieur d'une ouverture (30a) du corps de vanne (30) et des moyens de déplacement par coulissement à l'intérieur du corps de vanne (30), des éléments de fermeture (31, 32) de la trémie (18) et du conteneur (20), de manière à isoler ou à mettre en communication la trémie (18) et le conteneur (20) en position levée et engagée à l'intérieur de l'ouverture (30a) du corps de vanne (30).

## Patentansprüche

1. Verfahren zur Behandlung von durch Bestrahlung aktivierten Elementen (4) zu deren Entsorgung, wobei die aktivierten Elemente zwei Bestandteile mit unterschiedlichen magnetischen Eigenschaften aufweisen, einen ersten Bestandteil, der eine starke Aktivität aufweist und einen zweiten Bestandteil, der eine wesentlich geringere Aktivität aufweist,
**dadurch gekennzeichnet, daß**
- die aktivierten Elemente (4) zerkleinert werden, um einzelne Bruchstücke zu erhalten, die jeweils im wesentlichen aus dem ersten oder zweiten Bestandteil bestehen,
- die Bruchstücke, die im wesentlichen aus dem ersten Bestandteil bestehen, durch magnetische Mittel (12) abgetrennt und zu einer ersten Station zur Entnahme und Verpackung geführt werden, und wobei die im wesentlichen aus dem zweiten Bestandteil bestehenden Bruchstücke zu einer kontinuierlichen Fördervorrichtung (21) geleitet werden,
- eine Erfassung durch Messung der Radicaktivität von Bruchstücken erfolgt, die im wesentlichen aus dem ersten Bestandteil bestehen und sich auf der kontinuierlichen Fördervorrichtung (21) befinden, und dadurch, daß
- die Bruchstücke, die auf der kontinuierlichen Fördervorrichtung (21) abgelagert sind, zu einer zweiten Entnahmestation entladen werden, wenn keine Bruchstücke des ersten Bestandteils auf der kontinuierlichen Fördervorrichtung (21) erfaßt werden, und wobei die Bruchstücke in die erste Station zur Entnahme und Verpackung (18, 19, 20) entladen werden, wenn wenigstens ein Bruchstück des ersten Bestandteils auf der kontinuierlichen Fördervorrichtung (21) erfaßt wird.

2. Verfahren nach Anspruch 1, dadurch gekennzeichnet, daß die durch Bestrahlung aktivierten Elemente Hüllen von Brennstoffelementen eines Gas-Graphit-Reaktors sind, die aus einem rohrförmiqen Element aus Graphit und nichtrostenden Stahldrähten bestehen, die in das Graphitelement eingelassen sind, und wobei das Zerkleinern der Rohrelemente aus Graphit durchgeführt wird, um Graphit stücke und Drahtabschnitte aus nichtrostendem Stahl zu erhalten.

3. Verfahren nach Anspruch 2, dadurch gekennzeichnet, daß die Abschnitte aus nichtrostendem Stahl, die von den Graphitstücken getrennt sind, in einem hochdichten Behälter (20) gesammelt werden.

4. Vorrichtung zur Entsorgung durch Bestrahlung aktivierter Elemente, gekennzeichnet durch
- einen Zerkleinerer (6),
- Mittel zum Herausführen (10) des Produktes in getrennter Form am Ausgang des Zerkleinerers,
- einer magnetischen Trennvorrichtung (12), die einen Eingangsbereich aufweist, der mit; den Auslaßmitteln (10) des Zerkleinerers (6) zu dessen Speisung verbunden ist und zwei Ausgangswege (15b, 16b) für das aufgeteilte Produkt aufweist,
- eine erste Verpackungseinrichtung (18, 19, 20), in der ein erster Ausgangsweg (15b) der Trennvor richtung mündet,
- eine kontinuierliche Fördervorrichtung (21) mit zwei Förderrichtungen, mit einem ersten Ende, welches unter dem zweiten Ausgangsweg (16b) der Trennvorrichtung und oberhalb der ersten Verpakkungseinrichtung (18, 19, 20) angeordnet ist,
- einen Radioaktivitätsdetektor (27), der in der Nähe der Mittel zur kontinuierlichen Handhabung (21) angeordnet ist,
- ein zweites Mittel zur Lagerung und Entnahme (24, 25, 26), welches unter einem zweiten Ende der kontinuierlichen Fördervorrichtung (21) angeordnet ist, um die getrennten Produkte, die von der kontinuierlichen Fördervorrichtung (21), welche sich in einer ersten Förderrichtung bewegt, abgeladen werden.

5. Vorrichtung nach Anspruch 4, dadurch gekennzeichnet, daß die Zerkleinerungsvorrichtung (6) Messer aufweist.

6. Vorrichtung nach einem der Ansprüche 4 und 5, dadurch gekennzeichnet, daß die magnetische Trennvorrichtung (12) hochdichte Rollen aufweist, die Seltenerd-Permanentmagneten aufweisen.

7. Vorrichtung nach Anspruch 6, dadurch gekennzeichnet, daß die magnetische Trennvorrichtung (12) zwei Trennetagen (12a, 12b) aufweist.

8. Vorrichtung nach einem der Ansprüche 4 bis 7, dadurch gekennzeichnet, daß der Detektor zur Erfassung der Radioaktivität (27) ein Scintillationsdetektor ist.

9. Vorrichtung nach einem der Ansprüche 4 bis 8, dadurch gekennzeichnet, daß mindestens eines der ersten Verpakkungsmittel (18, 19, 20) und des zweiten Verpackungsmittels (24, 25, 26) einen Trichter (18, 24), ein schiebergehäuse (39), welches unter der Ausgangsöffnung des Trichters (18) angeordnet ist, ein Verschlußelement (31) des Trichters (18), einen Behälter zum Transport und zur Lagerung (20), der ein dichtes Verschlußelement (32) aufweist, Mittel zum Transport und zum Anheben des Behälters (29) ins Innere einer Öffnung (30a) des Schiebergehäuses (30) und Mittel zur Verschiebung von Verschlußelementen (31, 32) des Trichters (18) und des Behälters (20) im Inneren des Schiebergehäuses (30), derart, daß der Trichter (18) und der Behälter (29) voneinander isoliert oder miteinander verbunden werden, wenn der Behälter (20) sich in angehobener und im Inneren der Öffnung (30a) des Schieberkörpers (30) befindet, aufweist.

## Claims

1. A process for treating elements (4) activated by irradiation, for the purpose of their removal, the activated elements comprising two constituents having different magnetic properties, one constituent, or the firts constituent, having high level of activity and the other constituent, or the second constituent, having a substantially lower level of activity,
**characterised by**
- crushing of the activated elements (4) to obtain unit fragments each consisting principally of the first or the second constituent,
- separating and conveying by magnetic means (12) of fragments consisting principally of the first constituent towards a first discharge and conditioning station (18, 19, 20), and fragments consisting principally of the second constituent towards means for continuous handling (21),
- detecting, by measurement of radioactivity, fragments consisting principally of the first constituent, occurs on the means for continuous handling (21),
- emptying the fragments placed on the means for continuous handling (21) towards a second discharge and storage station (24, 25, 26) if no fragment of the first constituent is detected on the means for continuous handling (21), and towards the first discharge and conditioning station (18, 19, 20) if at least one fragment of the first constituent is detected on the means for continuous handling (21).

2. A process according to Claim 1, **characterised in that** the elements activated by irradiation are casings of combustible elements of a graphite-gas reactor, which comprise a tubular graphite element and stainless steel threads implanted in the graphite element, and the tubular graphite elements are crushed to obtain graphite pieces and sections of stainless steel threads.

3. A process according to Claim 2, **characterised in that** the sections of stainless steel threads separated from the graphite pieces are collected in a high integrity container (20).

4. A device for removing elements activated by irradiation **characterised in that** it comprises
- a crusher (6),
- means (10) for emptying the product in a separated form at the outlet of the crusher,
- a magnetic separator (12) having an inlet part connecting to the emptying means (10) of the crusher (6) for the feeding thereof, and two outlet channels (15b, 16b) for the product in a separated form,
- first, conditioning mean (18, 19, 20) into which a first outlet channel (15b) of the separator opens,
- means for continuous handling (21) in two flow directions comprising a first end positioned below the second outlet channel (16b) of the separator and above the first conditioning means (18, 19, 20),
- a radioactivity detector (27) positioned in the vicinity of the means for continuous handling (21),
- and second, storage and emptying means (24, 25, 26) positioned below a second end of the means for continuous handling (21) for receiving products separated and discharged by the means for continuous handling (21) in a first flow direction.

5. A device according to Claim 4, **characterised in that** the crusher (6) is a crusher with knives.

6. A device according to Claim 4 or 5, **characterised in that** the magnetic separator (12) is a high intensity roller separator comprising rare-earth permanent magnets.

7. A device according to Claim 6, **characterised in that** the magnetic separator (12) comprises two separation stages (12a, 12b).

8. A device according to any one of Claims 4 to 7, **characterised in that** the radioactivity detector (27) is a scintillation detector

9. A device according to any one of Claims 4 to 8, **characterised in that** at least one of the first, conditioning means (18, 19, 20) and the second, conditioning means (24, 25, 26) comprises a hopper (18, 24), a valve body (30) positioned under the opening of the hopper (18) outlet, a component (31) for closing the hopper (18), a transport and storage container (20) comprising a tight closing component (32), means for transporting and lifting the container (20) inside an opening (30a) of the valve body (30) and (means for moving, by sliding inside the valve body (30), closing components (31, 32) of the hopper (18) and the container (20) such that they separate or connect the hopper (18) and the container (20) when in a raised and engaged position inside the opening (30a) of the valve body (30).
